# EUROPEAN PATENT APPLICATION

(11) **EP 1 178 212 A2**
(43) Date of publication of application: **06.02.2002**
(21) Application number: 01202900.5
(22) Date of filing: 30.07.2001
(51) Int. Cl.: F04D 13/06, F04D 15/02, F04D 29/58, F04D 1/06

(54) **Water cooled centrifugal pump**

(30) Priority: 03.08.2000 IT MI001817
(71) Applicant: CLABER S.P.A., I-33080 Fiume Veneto Pordenone (IT)
(72) Inventor: Hepperle, Willi, 89198 Westerstetten (DE)
(74) Representative: Mittler, Enrico

(57) **Abstract**

A water cooled centrifugal pump is described. The pump comprises a pump body (1) with a pump chamber (4) and a water cooled motor chamber (5) communicating with each other, at least a pumping stage (7) with intake scroll (8) and impeller (9) that is housed in said pump chamber (4) and an electric motor (18) with closing casing (22) housed in said motor chamber (5) and mechanically connected with said impeller (9) through a motor shaft (10) provided with water sealing means (32). A sensor of temperature (43) is located inside a part of said casing (22) of the motor (18) in contact with the cooling water and electrically connected with a control unit (47) so as to interrupt the power supply to said motor (18) in case of detection of a temperature above a predetermined limit.

## Description

The present invention concerns a water cooled centrifugal pump.

The use of pumps aimed at guaranteeing the supply of water to buildings or cultivated fields that are not reached by the public water network but at the same time are relatively near watercourses, small lakes, ponds or other sources of possible water supply is known and widespread.

In such case the pump is put in condition to be able to draw water from the supplying source and to make it reach the place where it is used with the due pressure.

The pumps currently in use, whether they are surface ones, submergeable or submerged, are essentially centrifugal pumps that are set in action by an air cooled asynchronous electric motor.

The air cooling determines a considerable noisiness that makes the operation of the pump quite annoying, both if one uses it inside of a building as well as, for several hours, in particular in the morning and in the evening, in an external environment for watering purposes. In addition the air cooling makes necessary the use of a motor compatible with the cooling needs, therefore with relatively large dimensions, with consequent negative effect on the weight of the pump.

In addition an essential requirement of these pumps is that they must be filled with water before they are put into operation. Otherwise, as it often happens due to forgetfulness or inexperience, the dry operation of the pump determines the overheating of the mechanical organs of the same pump in a few minutes and their consequent damaging, sometimes of the irreparable type.

The same can happen in case of light running due to several other reasons, for instance if the solenoid valve for the control of the watering gets closed without the pump being turned off, if the suction hose is not tightly fastened to the mouth of the pump or it is not watertight or it is obstructed or else it has the inlet mouth outside of the water, if the water supplying source has dried up, and so on.

In order to obviate this inconvenience pumps are sometimes equipped with electromechanical type accessory devices, either separate or integrated within the pump, that detect the flow of water inside the pump chamber and, if this is lower than a predetermined minimum, they interrupt the operation of the pump. These accessory devices, provided for instance in EP-A-0819851, are however relatively complex and they are often cause of several inconveniences.

There are known centrifugal pumps in which, as described for instance in Italian patent 1269152, a temperature sensor is inserted inside the pump chamber so as to operate in condition of submersion in the water present inside of the pump chamber.

However this solution does not allow to detect a condition of complete absence of water, as the one that occurs at the moment of the first activation of the pump or of its reactivation after an extended pause, for instance at the end of the winter.

In addition the sensor of temperature thus positioned is not capable to obviate a situation of danger for the seal packing that is placed between the driving shaft and the impeller of the pump, such as the one that can occur in case the level of the water inside the pump is low enough as to leave the seal packing uncovered before the temperature of the water raises to a level such as to determine the intervention of the temperature sensor. In such case the seal packing rapidly becomes very hot and it gets damaged in a destructive way; in addition the high heat energy that is produced on the driving shaft is transferred in the pump chamber, where it creates a cavitation effect and it reduces the increase in the temperature of the water as compared with the one of the seal packing, that consequently ends up being damaged before the temperature sensor can intervene so as to cause the arrest of the pump. On the other hand, if the switching temperature were to be regulated at a lower value, in case of high temperature of the water or of the external environment the temperature sensor could operate too soon.

An other disadvantage with the pumps currently in use is bound to the automatic on-off function normally present, which allows to automatically turn the pump off when, as a consequence of the closing of the water delivery valve, the delivery pressure reaches the maximum allowed value and to restart it equally automatically when, as a consequence of the reopening of the valve, the input pressure decreases again thus getting below its static value. In order to obtain this result, as described for instance in WO-A-96/23936, pressure sensitive electromechanical switches are utilised, which are rather complex and needy of adjustment and of diaphragm and spring pressure meters having sizeable dimensions. In addition the pressure meter must be submerged in the water flow with consequent problems of assembly and water tightness.

An additional disadvantage with currently known pumps consists in the fact that an undesirable activation of the pump is possible with the pump at rest, due to non-authorized operation of a switch integrated within the pump or to a reduction in pressure below the automatic operation value, which can lead to the flooding of the surrounding area.

In addition, in the known pumps there are no integrated timing systems that allow to automatically start and stop the pump at pre-established times. There is only the possibility to interpose between the delivery pipe and the pump a computerised central unit that senses the fall in pressure consequent to the opening of a delivery valve and consequently controls the starting of the pump, and vice versa. However this solution is obviously possible only with pumps provided with a switch sensitive to pressure.

Finally a typical disadvantage with water cooled pumps consists in that the coupling for the water output hose is located on the top of the casing of the pump, so that the discharge pipe must extend vertically from the pump and then get down towards the ground with consequent possibility of breaking of the same pipe.

In view of the state of this art, the main scope of the present invention is to provide a centrifugal pump with water cooling that is capable to obviate the vacuum operation of the pump both in the case of an empty pump as well as in the case of a pump partially filled with water.

Another scope of the present invention is to provide a centrifugal pump with water cooling that provides an automatic on-off function achieved with a type of switch different and simpler than the current switches with pressure meter.

Moreover a scope of the present invention is to provide a centrifugal pump with water cooling that makes an undesirable starting of the pump substantially impossible.

An additional scope of the present invention is to provide a centrifugal pump with water cooling that provides the possibility to automatically start and stop the same pump at pre-established times.

Still an additional scope of the present invention is to provide a centrifugal pump with water cooling that provides a different and more comfortable positioning of the coupling for the water output hose.

In consideration of the aforesaid scopes the present invention consists in a centrifugal pump comprising a pump body with a pump chamber and a water cooled motor chamber communicating with each other, at least a pumping stage with intake scroll and impeller housed in said pump chamber and an electric motor with closing casing housed in said motor chamber and mechanically connected with said impeller through a driving shaft provided with water sealing means, characterized in that it comprises at least one switching temperature sensor located within a part of said motor casing in contact with the cooling water and electrically connected with a control unit so as to interrupt the power supply to said motor in case of detection of a temperature internal to said casing that exceeds a predetermined limit.

In this way a centrifugal pump has been obtained that in the first place replaces the traditional air cooling with a water cooling that allows to considerably reduce the noisiness of the pump and makes the use of a smaller and less heavy motor possible.

Secondly the arrangement of the temperature sensor inside the motor casing not only allows to detect an undesirable and dangerous increase in the temperature of the motor in conditions of vacuum running but also in the presence of a low level of water. The good conditions of the motor and the watertight packing placed on the connection shaft between the motor and the impeller of the pump are thus guaranteed in both cases.

If desirable, a heating element can be positioned next to the temperature sensor in order to allow a smaller response time of the same.

In a preferred embodiment the pump according to the invention provides an automatic on-off function obtained by means of a switch that utilises, rather than a pressure meter, a mechanical stress meter (for instance of the type with quartz or DMS) which is in turn subjected to the servicing water pressure of the pump.

In addition a switch is preferably integrated in the pump that can be remotely operated by means of remote control with receiver that is in turn integrated in the same pump.

In addition a timer directly integrated in the pump is preferably provided. In such case it is possible to do without the usual solenoid valves for the distribution of the water.

It is also possible to provide a pump with timer, without any pressure controlled on-off circuit. This would lead to an economical general conception of an automatic watering system with pump.

Finally it is preferably provided that the pump has a horizontal coupling for water output hose, that is positioned close to the ground and has an external thread suitable for the screwing of a male coupling for common hose watering system. The hose is therefore safeguarded and there are no problems in the connection of the pump to the water supply system for watering purposes.

These and other characteristics of the present invention, together with the advantages deriving from it, will be made more evident by the following detailed description of an embodiment thereof that is illustrated as a non-limiting example in the enclosed drawings, in which:
Figure 1 is a longitudinal section view of a pump according to the present invention;
Figure 2 shows the electrical layout of principle of the electronic circuitry for the control of the pump in Figure 1;
Figures 3 and 4 show, respectively in longitudinal section and bottom plan, the mechanical detail of a variation of the pump in Figure 1.

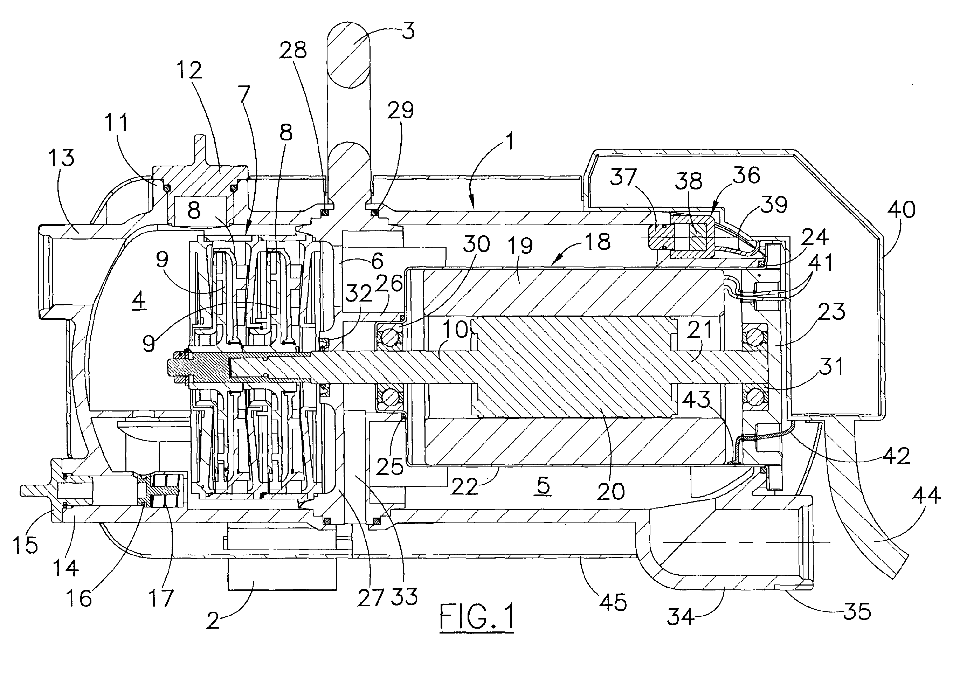

The centrifugal pump shown in Figure 1 is a surface pump that comprises a pump body 1 provided with supporting feet 2 and handle for its handling and transport 3. Inside the pump body 1 a pump chamber 4 and a motor chamber 5 communicating with each other through a window 6 are defined.

In the pump chamber 4 a centrifugal pump 7 with two stages is housed, each one made of an external intake scroll 8 and an impeller 9, the latter being mortised onto a motor shaft 10. The pump chamber 4 is provided with a mouth 11 for the charging with water, normally closed by a stopper 12, for the initial charging of water necessary for the operation of the pump, with a coupling 13 for a water suction hose water and a water discharge mouth 14, normally closed by a stopper 15 and provided with non-back-flow valve 16 with spring 17, for the discharge of the water at the moment of the turning off of the pump.

In the motor chamber 5 an electric motor 18 is housed which is made of a stator 19 and a rotor 20, from which, on one side, the motor shaft 10 and, on the other side, a back extension 21 of the same extend. The stator 19 is housed inside a casing 22 made of stainless steel, that is supported by a back closure 23 of the pump body 1 with interposition of a sealing ring 24 on one end and on the other end , still with interposition of a sealing ring 25, is supported by a sleeve part 26 on one side that extends from a partition 27 with sealing rings 28 and 29 interposed between the pump chamber 4 and motor chamber 5 in order to allow the pumping water to reach the motor chamber 5 through the window 6 but not the motor shaft 10 and, through it, the rotor 20. The motor shaft 10 and its back extension 21 are respectively supported in a revolvingly way by the aforesaid sleeve part 26 and by the back wall 23 of the pump body 1 by means of respective ball bearings 30 and 31. A water-tight packing 32 is interposed between the motor shaft 10 and the partition 27 in order to prevent the pumping water to leak through the coupling surfaces of the same ones. The possible leaked water is however destined to be discharged through a vertical passage 33.

From the motor chamber 5, in proximity of the bearing surface defined by the feet 2, a coupling 34 with external thread 35 for a hose for the output of the water being pumped out extends horizontally.

In the upper part of the motor chamber 5 a pressure meter 36 is arranged that is made up of a small piston 37 that is biased by the pressure of the water present in the aforesaid chamber and by a quartz 38 onto which the small piston 37 operates in order to convert the mechanical stress thus exerted into an electric tension. Through an electric cable 39 such electric tension is transmitted to an electronic control circuit (not shown) contained in a box 40 that is fastened to the pump body 1 on its back. To the aforesaid control circuit also the stator winding of the electric motor 18 is connected through a pair of power conductors 41, as also, through a electric wire 42 a thermocouple or bimetal sensor of temperature 43 fastened inside the casing 22 of the electric motor 18 in order to detect the internal temperature of the motor and to determine the interruption of the power supply to motor 18. A heating element, not shown in the drawings, can be placed inside the casing 22 in proximity of the sensor of temperature 43. An electric cable 44 allows the connection of the control circuit, and therefore of the pump as a whole, to an appropriate power supply.

Finally a casing 45 shaped to the liking of the manufacturer encloses the entire pump body 1, an exception made for the feet 2, the handle 3, the water input and output couplings 13 and 34, the mouths for the charge and discharge 14 and 16 and the box 40 for the containment of the control electronic circuit.

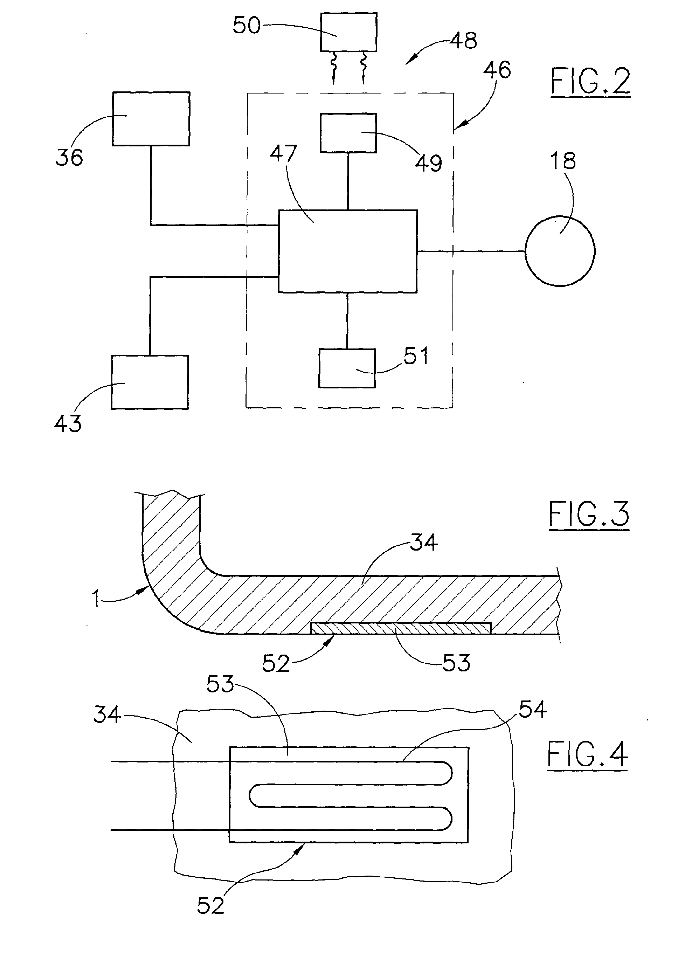

A schematic rendering of the control electronic circuit is shown in Figure 2, where the aforesaid circuit is indicated as a whole by the reference number 46 and it fundamentally comprises a microprocessor control unit 47 assigned to the control of the electric motor 18. The control unit 47 provides also a function of on-off switch under the control of the pressure meter 36 and of the temperature sensor 43 and under the additional control of a remote control 48 consisting in a radio receiver 49 integrated in the pump and in an external radio transmitter 50 and of an integrated timer 51.

In Figures 3 and 4 there is instead shown the detail of a variation of the pump in Figure 1, that provides the use of a DMS type mechanical stress meter 52 instead of the pressure meter 36. The mechanical stress meter 52 is inserted as an example in the water output coupling 34 and it consists, still as an example, in one plate 53 with power conductors 54 with resistance variable with the effort being exerted on the plate.

The pump illustrated in the drawings is destined to work in the way that will be exposed hereinafter.

The internal space of the pump body 1 must in the first place be filled with water before the setting into operation of the pump. To such purpose the stopper 15 is removed and water must be input through the charging mouth 14. After having done so, obviously after having connected the inlet coupling 13 of the same pump to a suction hose that draws in the preselected water source and the output coupling 34 to a hose for the distribution of the water, the pump is then activated by connecting the power cable 44 to an appropriate power supply and by operating the remote control 48.

At the time established by the timer and for the duration fixed by the same timer 51 the electric motor 18 is set in operation and it controls the rotation of the double impeller 9 of the centrifugal pump. The pumping of the water form the input 13 to the output 34 thus begins with a circulation of the same water inside the pump body 1 that allows the water cooling of the electric motor 18.

In case of total or partial lack of water inside the pump body 1 the sensor of temperature 43 controls the stop of the motor 18 for the safeguard of the same motor, of the mechanical organs of the pump and of the water-tight packing 32 placed on the motor shaft 10.

The pressure meter 36 or, as an alternative, the mechanical stress meter 52 controls automatically, by on-off function, the stop of the pump when the water pressure inside the pump body 1 exceeds a predetermined value and the restart of the same pump once the pressure lowers again.

Still through the remote control 48 the putting to rest of the pump is controlled.

## Claims

1. Centrifugal pump comprising a pump body (1) with a pump chamber (4) and a water cooled motor chamber (5) communicating with each other, at least a pumping stage (7) with intake scroll (8) and impeller (9) housed in said pump chamber (4) and an electric motor (18) with closing casing (22) housed in said motor chamber (5) and mechanically connected with said impeller (9) through a motor shaft (10) provided with water sealing means (32), **characterized in that** it comprises at least one switching temperature sensor (43) located inside a part of said casing (22) of the motor (18) in contact with the cooling water and electrically connected with a control unit (47) so as to interrupt the power supply to said motor (18) in case of detection of a temperature internal to said casing (22) that exceeds a predetermined limit.

2. Pump according to claim 1, **characterized in that** it comprises a heating element placed in proximity of the switching temperature sensor (43).

3. Pump according to claim 1, **characterized in that** said pump body (1) has a horizontal coupling (34) for the water output hose, that is located in proximity of the bearing surface of the pump.

4. Pump according to claim 3, **characterized in that** said output coupling (34) has an external threading (35) which is suitable for the screwing of a male coupling for hose watering system.

5. Pump according to claim 1, **characterized in that** it comprises a pressure meter (36) placed inside the motor chamber (5) and electrically connected with said control unit (47) in order to provide an automatic on-off function at the variation of the pressure inside the pump body (1).

6. Pump according to claim 1, **characterized in that** it comprises a mechanical stress meter (52) placed outside the motor chamber (5) and electrically connected with said control unit (47) in order to provide an automatic on-off function at the variation of the pressure inside the pump body (1).

7. Pump according to claim 1, **characterized in that** it comprises a remote control (48) with integrated receiver (49) associated with said control unit (47).

8. Pump according to claim 1, **characterized in that** it comprises an integrated timer (51) associated with said control unit (47).

9. Pump according to claim 1, **characterized in that** it comprises a shaped casing (45) placed around the pump body (1).
